# EUROPÄISCHE PATENTSCHRIFT

(11) **EP 4 522 495 B1**
(45) Veröffentlichungstag und Bekanntmachung des Hinweises auf die Patenterteilung: **01.07.2026**
(21) Anmeldenummer: 23717953.6
(22) Anmeldetag: 12.04.2023
(51) Int. Cl.: B62J 1/12

(54) **SITZVORRICHTUNG FÜR EIN NEIGEFAHRZEUG UND NEIGEFAHRZEUG MIT EINER DERARTIGEN SITZVORRICHTUNG**
SEAT DEVICE FOR A TILTING VEHICLE AND TILTING VEHICLE WITH SUCH A SEAT DEVICE
DISPOSITIF DE SIÈGE POUR UN VÉHICULE INCLINABLE ET VÉHICULE INCLINABLE AVEC UN TEL DISPOSITIF DE SIÈGE

(30) Priorität: 09.05.2022 DE 102022111415
(43) Veröffentlichungstag der Anmeldung: 19.03.2025
(73) Patentinhaber: Bayerische Motoren Werke Aktiengesellschaft, 80809 München (DE)
(72) Erfinder: STRASSER, Dieter, 82386 Oberhausen (DE); ISING, Christian, 80687 München (DE)
(86) Internationale Anmeldenummer: PCT/EP2023/059471
(87) Internationale Veröffentlichungsnummer: WO 2023/217479

(56) Entgegenhaltungen:
- EP-A1- 0 718 144
- FR-A- 1 096 429
- JP-A- H10 297 566
- US-B2- 9 643 673

## Beschreibung

Die Erfindung betrifft eine Sitzvorrichtung für ein Neigefahrzeug, mit mindestens einer Sitzwanne, die zu einer Fahrzeugkomponente, wie Tank, des Neigefahrzeugs durch einen Spalt berührungsfrei beabstandet an einer Tragstruktur des Neigefahrzeugs festlegbar oder festgelegt ist, mit mindestens einem in oder an der Sitzwanne festgelegten Polstermittel, das auf einer der Sitzwanne abgewandten Seite eine Sitzfläche für einen Nutzer des Neigefahrzeugs bildet, mit mindestens einem elastisch verformbaren Füllelement, das im Spalt zwischen Fahrzeugkomponente und Sitzwanne anordenbar oder angeordnet und den Spalt zumindest auf der Seite der Sitzfläche in Gänze oder zumindest abschnittsweise verschließend festgelegt ist, und mit mindestens einem Bezugmittel, das das Polstermittel zumindest im Bereich der Sitzfläche mit einem Sitzflächen-Abschnitt des Bezugmittels in Gänze oder zumindest abschnittsweise überfängt und das an einer äußeren Oberfläche der Sitzwanne, die der Fahrzeugkomponente zugewandt ist, mit dem Sitzflächen-Abschnitt festgelegt ist, wobei das Bezugmittel auf der dem Polstermittel abgewandten Seite der Sitzwanne an einem oberen Ende mit einem ersten Festlegeabschnitt an der Sitzwanne festgelegt ist, wobei das Füllelement am ersten Festlegeabschnitt anliegt und ein Neigefahrzeug mit einer derartigen Sitzvorrichtung.

Sitzvorrichtungen sind in unterschiedlichen Ausführungsformen aus dem Stand der Technik bekannt. Diese werden an einer Tragstruktur eines Neigefahrzeugs festgelegt und grenzen an eine Fahrzeugkomponente, beispielsweise einen Fahrzeugtank, an. Aufgrund herstellungsbedingter Toleranzen bei der Herstellung der Sitzvorrichtung kann es nie ganz vermieden werden, dass zwischen Sitzvorrichtung und der Fahrzeugkomponente, insbesondere zwischen einer Sitzwanne der Sitzvorrichtung und der Fahrzeugkomponente, ein Spalt angeordnet ist oder ein Polstermittel der Sitzvorrichtung überpresst ist.

Bei dem Vorherrschen eines großen Spalts, also einer Lücke oder Fuge, wird dieser von einem Benutzer des Neigefahrzeugs als nicht wertig anmutend aufgefasst. Das gleiche gilt für eine Überpressung des Polstermittels, bei der ein übermäßig starker Faltenwurf entstehen kann.

Eine gattungsgemäße Sitzvorrichtung ist bekannt aus EP 0 718 144 A1.

Nicht gattungsgemäße Sitzvorrichtungen, bei denen das Bezugmittel nicht auf der dem Polstermittel abgewandten Seite der Sitzwanne an einem oberen Ende mit einem ersten Festlegeabschnitt an der Sitzwanne festgelegt ist und bei denen das Füllelement nicht am ersten Festlegeabschnitt anliegt, sind bekannt aus JP H10 297566 A, FR 1 096 429 A und US 9 643 673 B2.

Eine Aufgabe eines Ausführungsbeispiels der Erfindung ist, eine Sitzvorrichtung für ein Neigefahrzeug sowie ein Neigefahrzeug mit einer derartigen Sitzvorrichtung vorzuschlagen, bei der ein Übergang von Sitzvorrichtung auf Fahrzeugkomponente bei gleichen Fertigungstoleranzen verbessert ausgebildet ist.

Diese Aufgabe wird bei einer Eingangs genannten Sitzvorrichtung für ein Neigefahrzeug, dadurch gelöst, dass der erste Festlegeabschnitt einen das Bezugmittel umlenkenden Faltbereich umfasst, wobei das Bezugmittel im Faltbereich vom Sitzflächen-Abschnitt in den Füllelement-Abschnitt übergeht.

Dadurch, dass die Sitzvorrichtung ein elastisch verformbares Füllelement umfasst, das zwischen Fahrzeugkomponente und Sitzwanne angeordnet ist, kann ein zwischen Sitzwanne und Fahrzeugkomponente vorherrschender Spalt durch das Füllelement in Gänze oder abschnittsweise verschlossen sein. Hierdurch wird die Sitzfläche der Sitzvorrichtung bündig bis zur Fahrzeugkomponente fortgesetzt, was als optisch ansprechend und wertig empfunden wird.

Dadurch, dass das Bezugmittel auf der dem Polstermittel abgewandten Seite der Sitzwanne an einem oberen Ende mit einem ersten Festlegeabschnitt an der Sitzwanne festgelegt ist, wobei das Füllelement am ersten Festlegeabschnitt anliegt, kann ein Faltenwurf des Bezugmittels im Bereich des Sitzflächen-Abschnitts verhindert oder zumindest reduziert werden.

Solchenfalls ist ein Verformen des Füllelements entkoppelt von der Sitzfläche und vom Sitzflächen-Abschnitt des Bezugmittels.

Durch das Vorsehen eines Faltbereichs, bei dem das Bezugmittel vom Sitzflächen-Abschnitt in den Füllelement-Abschnitt übergeht und somit beide Abschnitte gemeinsam am ersten Festlegeabschnitt festgelegt sind, kann das Bezugmittel einen Festlegepunkt des Füllelements bilden und gleichzeitig mechanisch vom Sitzflächen-Abschnitt entkoppelt sein. Der Faltbereich kann eine Umlenkung des Bezugmittels um 180 Grad umfassen, wobei das Bezugmittel im Faltbereich doppellagig ausgebildet ist.

Unter einem Spalt wird ein Raum zwischen Sitzwanne und Fahrzeugkomponente verstanden, durch den Sitzwanne und Fahrzeugkomponente zueinander berührungsfrei beabstandet sind. Hierbei werden die Begriffe Spalt, Fuge und Lücke synonym verstanden.

Unter einem Neigefahrzeug werden Fahrräder, Motorräder oder motorradähnliche Kraftfahrzeuge, wie Motorroller, insbesondere zwei-, drei- oder vierrädrige Motorroller, Scooter, neigbare Trikes, Quads oder Dergleichen verstanden.

Das Füllelement kann ein separates oder separierbares Bauteil umfassen. Darüber hinaus ist es denkbar, dass das Füllelement an der Fahrzeugkomponente, wie Fahrzeugtank, lösbar oder unlösbar festlegbar ist.

Bei einer Ausführungsform der Sitzvorrichtung erweist es sich als vorteilhaft, wenn das Füllelement lösbar, insbesondere form- und/oder kraftschlüssig, insbesondere, verschraubt oder verklipst, oder unlösbar, insbesondere form-, kraft- und/oder stoffschlüssig, insbesondere verklebt, angespritzt, vernietet oder verschweißt, an der Sitzwanne festgelegt ist.

Das Füllelement kann beispielsweise eine Oberfläche oder eine Beschichtung umfassen, die dem des Bezugmittels ähnelt oder identisch ist. Hierdurch lässt sich ein zumindest nahezu fugenloser Übergang von Polstermittel auf das Füllelement realisieren.

Darüber hinaus ist bei einer Weiterbildung letztgenannter Ausführungsform vorgesehen, dass das Bezugmittel das Füllelement durch einen Füllelement-Abschnitt des Bezugmittels in Gänze oder zumindest abschnittsweise, insbesondere auf der der Sitzwanne abgewandten Seite und/oder die Sitzfläche fortsetzend, überfängt.

Hierdurch wird die Sitzfläche durch das Bezugmittel überfangen, wodurch Sitzfläche, insbesondere Sitzflächen-Abschnitt des Bezugmittels und Füllelement-Abschnitt des Bezugmittels, eine geschlossene Oberfläche bilden.

Darüber hinaus erweist es sich als vorteilhaft, wenn das Füllelement zumindest bereichsweise mittelbar oder unmittelbar an der Sitzwanne festgelegt ist und wenn der Füllelement-Abschnitt des Bezugmittels auf der dem Polstermittel abgewandten Seite der Sitzwanne an einem dem oberen Ende der Sitzwanne abgewandten Ende des Füllelements mit einem zweiten Festlegeabschnitt an der Sitzwanne festgelegt ist, wobei die Sitzwanne und das Bezugmittel das Füllelement in Gänze umgeben.

Solchenfalls ist das Füllelement in Gänze durch Bezugmittel und Sitzwanne umgeben. Es ist denkbar, dass das Füllelement ausschließlich durch das Bezugmittel an der Sitzwanne festgelegt ist. Solchenfalls ist das Füllelement an seinen beiden Enden einerseits durch den ersten Festlegeabschnitt und andererseits durch den zweiten Festlegeabschnitt an der Sitzwanne festgelegt.

Darüber hinaus ist bei einer Ausführungsform der Sitzvorrichtung vorgesehen, dass das Polstermittel am ersten Festlegeabschnitt und/oder am zweiten Festlegeabschnitt lösbar, insbesondere form- und/oder kraftschlüssig, insbesondere, geklammert, getackert, verschraubt oder verklipst, oder unlösbar, insbesondere form-, kraft- und/oder stoffschlüssig, insbesondere verklebt, angespritzt, vernietet oder verschweißt, an der Sitzwanne festgelegt ist.

Der erste Festlegeabschnitt ist solchenfalls unmittelbar an der Sitzwanne festgelegt und durch das Füllelement und das über das Füllelement verlaufende Polstermittel von außen nicht ersichtlich. Der zweite Festlegeabschnitt ist solchenfalls von außen ersichtlich und legt das Bezugmittel unmittelbar an der Sitzwanne fest.

Das Füllelement kann ein beliebiges Material umfassen, sofern es die technische Funktion erfüllt, dass das Füllelement elastisch verformbar ist. Hierdurch ist das Füllelement an unterschiedlich große Spalte anpassbar. Bei Ausführungsformen der Sitzvorrichtung erweist es sich als vorteilhaft, wenn das Füllelement einen Kunststoff, insbesondere ein Elastomer, oder einen Schaum, insbesondere eine Schaumlippe, und/oder wenn das Polsterelement einen Schaum umfasst.

Wenn das Füllelement beispielsweise einen Schaum oder ein Elastomer umfasst, kann das Füllelement an die Sitzwanne angespritzt sein. Das Füllelement kann mit dem Bezugmittel überfangen sein oder Bezugsmittelfrei an der Sitzwanne angeordnet sein.

Letzterenfalls kann das Füllelement eine Farbgebung und Oberflächenbeschaffenheit umfasst, die dem des Bezugsmittels zumindest ähnelt. Hierdurch kaschiert das Füllelement den Spalt, ohne vom Bezugsmittel überfangen zu sein.

Schließlich wird die Aufgabe gelöst durch ein Neigefahrzeug mit mindestens einer Fahrzeugkomponente, mit mindestens einer Tragstruktur und mit mindestens einer Sitzvorrichtung mit mindestens einem der zuvor genannten Merkmale, die mindestens eine Sitzwanne, welche zur Fahrzeugkomponente durch einen Spalt berührungsfrei beabstandet an der Tragstruktur festgelegt ist, die mindestens ein in oder an der Sitzwanne festgelegtes Polstermittel, das auf einer der Sitzwanne abgewandten Seite eine Sitzfläche für einen Nutzer des Neigefahrzeugs bildet, und die mindestens ein elastisch verformbares Füllelement aufweist, das im Spalt zwischen Fahrzeugkomponente und Sitzwanne angeordnet und den Spalt zumindest auf der Seite der Sitzfläche in Gänze oder zumindest abschnittsweise verschließend festgelegt ist.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Sitzvorrichtung.

In der Zeichnung zeigt:

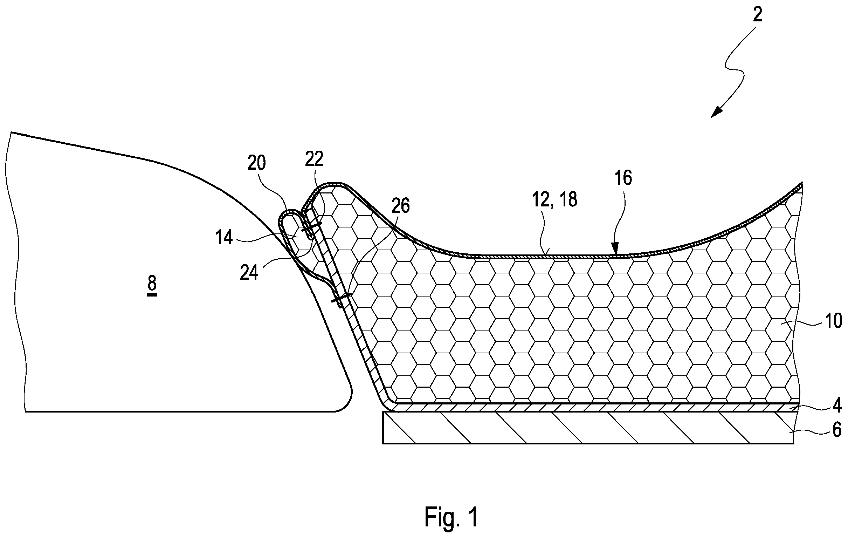

- Figur 1: Eine Schnittansicht eines Ausführungsbeispiels der Sitzvorrichtung.

Figur 1 zeigt eine insgesamt mit dem Bezugszeichen 2 versehene Sitzvorrichtung für ein Neigefahrzeug (in den Figuren nicht explizit dargestellt). Die Sitzvorrichtung umfasst eine Sitzwanne 4, die an einer Tragstruktur 6 des Neigefahrzeugs festgelegt ist. Darüber hinaus ist die Sitzwanne 4 derart an der Tragstruktur 6 festgelegt, dass sie zu einer Fahrzeugkomponente 8 des Neigefahrzeugs durch einen Spalt beabstandet ist. Bei dem in Figur 1 gezeigten Ausführungsbeispiel umfasst die Fahrzeugkomponente 8 einen Fahrzeugtank.

Darüber hinaus umfasst die Sitzvorrichtung 2 ein Polstermittel 10, das auf einer der Sitzwanne 4 abgewandten Seite eine Sitzfläche 12 für einen Nutzer des Neigefahrzeugs bildet.

Darüber hinaus umfasst die Sitzvorrichtung 2 ein Füllelement 14, das im Spalt zwischen Fahrzeugkomponente 8 und Sitzwanne 4 angeordnet ist und den Spalt zumindest auf der Seite der Sitzfläche 12 in Gänze verschließt. Bei dem in Figur 1 gezeigten Ausführungsbeispiel umfasst die Sitzvorrichtung 2 ein Bezugmittel 16, das das Polstermittel 10 zumindest im Bereich der Sitzfläche 12 mit einem Sitzflächen-Abschnitt 18 in Gänze überfängt. Der Sitzflächen-Abschnitt 18 des Bezugmittels 16 ist an einer äußeren Oberfläche der Sitzwanne 4, die der Fahrzeugkomponente 8 zugewandt ist, festgelegt.

Darüber hinaus umfängt das Bezugmittel 16 mit einem Füllelement-Abschnitt 20 das Füllelement 14 auf der dem Polstermittel 10 abgewandten Seite des Füllelements 14.

Das Bezugmittel 16 ist an einem ersten Festlegeabschnitt 22 an der Sitzwanne 4 festgelegt. Im Bereich des ersten Festlegeabschnitts 22 umfasst das Bezugmittel 16 einen Faltbereich 24, in dem der Sitzflächen-Abschnitt 18 in dem Füllelement-Abschnitt 20 übergeht. Sowohl Sitzflächen-Abschnitt 18 als auch Füllelement-Abschnitt 20 des Bezugmittels 16 sind durch den ersten Festlegeabschnitt 22 an der Sitzwanne 4 festgelegt. Das Bezugmittel 16 umfängt das Füllelement 14 durch den Füllelement-Abschnitt 20 umfänglich und ist mit einem zweiten Festlegeabschnitt 26 an der Sitzwanne 4 festgelegt. Der zweite Festlegeabschnitt 26 ist an einem dem oberen Ende der Sitzwanne 4 abgewandten Ende des Füllelements 14.

Im Folgenden wird kurz die Wirkungsweise der Sitzvorrichtung 2 erklärt: Beim Festlegen der Sitzvorrichtung 2, insbesondere der Sitzwanne 4, an einer Tragstruktur 6 des Neigefahrzeugs, wird die Sitzvorrichtung 2 mit dem durch das Bezugmittel 16 umgebenden Füllelement 14 an die Fahrzeugkomponente 8 angelegt. Die Sitzwanne 4 wird an den vorgesehenen Montagepunkten an der Tragstruktur 6 festgelegt. Hierbei kann es zu einem Komprimieren des elastischen Füllelements 14 kommen, wodurch fertigungsbedingte Toleranzen der Sitzvorrichtung 2 optisch kaschierbar sind.

### Bezugszeichenliste

- 2: Sitzvorrichtung
- 4: Sitzwanne
- 6: Tragstruktur
- 8: Fahrzeugkomponente
- 10: Polstermittel
- 12: Sitzfläche
- 14: Füllelement
- 16: Bezugmittel
- 18: Sitzflächen-Abschnitt
- 20: Füllelement-Abschnitt
- 22: erster Festlegeabschnitt
- 24: Faltbereich
- 26: zweiter Festlegeabschnitt

## Patentansprüche

1. Sitzvorrichtung (2) für ein Neigefahrzeug, mit mindestens einer Sitzwanne (4), die zu einer Fahrzeugkomponente (8), wie Tank, des Neigefahrzeugs durch einen Spalt berührungsfrei beabstandet an einer Tragstruktur (6) des Neigefahrzeugs festlegbar oder festgelegt ist, mit mindestens einem in oder an der Sitzwanne (4) festgelegten Polstermittel (10), das auf einer der Sitzwanne (4) abgewandten Seite eine Sitzfläche (12) für einen Nutzer des Neigefahrzeugs bildet, mit mindestens einem elastisch verformbaren Füllelement (14), das im Spalt zwischen Fahrzeugkomponente (8) und Sitzwanne (4) anordenbar oder angeordnet und den Spalt zumindest auf der Seite der Sitzfläche (12) in Gänze oder zumindest abschnittsweise verschließend festgelegt ist, und mit mindestens einem Bezugmittel (16), das das Polstermittel (10) zumindest im Bereich der Sitzfläche (12) mit einem Sitzflächen-Abschnitt (18) des Bezugmittels (16) in Gänze oder zumindest abschnittsweise überfängt und das an einer äußeren Oberfläche der Sitzwanne (4), die der Fahrzeugkomponente (8) zugewandt ist, mit dem Sitzflächen-Abschnitt (18) festgelegt ist, wobei das Bezugmittel (16) auf der dem Polstermittel (10) abgewandten Seite der Sitzwanne (4) an einem oberen Ende mit einem ersten Festlegeabschnitt (22) an der Sitzwanne (4) festgelegt ist, wobei das Füllelement (14) am ersten Festlegeabschnitt (22) anliegt, **dadurch gekennzeichnet, dass** der erste Festlegeabschnitt (22) einen das Bezugmittel (16) umlenkenden Faltbereich (24) umfasst, wobei das Bezugmittel (16) im Faltbereich (24) vom Sitzflächen-Abschnitt (18) in den Füllelement-Abschnitt (20) übergeht.

2. Sitzvorrichtung (2) nach Anspruch 1, **dadurch gekennzeichnet, dass** das Füllelement (14) lösbar, insbesondere form- und/oder kraftschlüssig, insbesondere, verschraubt oder verklipst, oder unlösbar, insbesondere form-, kraft- und/oder stoffschlüssig, insbesondere verklebt, angespritzt, vernietet oder verschweißt, an der Sitzwanne (4) festgelegt ist.

3. Sitzvorrichtung (2) nach Anspruch 1 oder 2, **dadurch gekennzeichnet, dass** das Bezugmittel (16) das Füllelement (14) durch einen Füllelement-Abschnitt (20) des Bezugmittels (16) in Gänze oder zumindest abschnittsweise, insbesondere auf der der Sitzwanne (4) abgewandten Seite und/oder die Sitzfläche (12) fortsetzend, überfängt.

4. Sitzvorrichtung (2) nach einem der vorhergehenden Ansprüche, **dadurch gekennzeichnet, dass** das Füllelement (14) zumindest bereichsweise mittelbar oder unmittelbar an der Sitzwanne (4) festgelegt ist und dass der Füllelement-Abschnitt (20) des Bezugmittels (16) auf der dem Polstermittel (10) abgewandten Seite der Sitzwanne (4) an einem dem oberen Ende der Sitzwanne (4) abgewandten Ende des Füllelements (14) mit einem zweiten Festlegeabschnitt (26) an der Sitzwanne (4) festgelegt ist, wobei die Sitzwanne (4) und das Bezugmittel (16) das Füllelement (14) in Gänze umgeben.

5. Sitzvorrichtung (2) nach einem der vorhergehenden Ansprüche, **dadurch gekennzeichnet, dass** das Polstermittel (10) am ersten Festlegeabschnitt (22) und/oder am zweiten Festlegeabschnitt (26) lösbar, insbesondere form- und/oder kraftschlüssig, insbesondere, geklammert, getackert, verschraubt oder verklipst, oder unlösbar, insbesondere form-, kraft- und/oder stoffschlüssig, insbesondere verklebt, angespritzt, vernietet oder verschweißt, an der Sitzwanne (4) festgelegt ist.

6. Sitzvorrichtung (2) nach einem der vorhergehenden Ansprüche, **dadurch gekennzeichnet, dass** das Füllelement (14) einen Kunststoff, insbesondere ein Elastomer, oder einen Schaum, insbesondere eine Schaumlippe, und/oder dass das Polsterelement (10) einen Schaum umfasst.

7. Neigefahrzeug mit mindestens einer Fahrzeugkomponente (8), mit mindestens einer Tragstruktur (6) und mit mindestens einer Sitzvorrichtung (2) nach einem der Ansprüche 1 bis 6, die mindestens eine Sitzwanne (4), welche zur Fahrzeugkomponente (8) durch einen Spalt berührungsfrei beabstandet an der Tragstruktur (6) festgelegt ist, die mindestens ein in oder an der Sitzwanne (4) festgelegtes Polstermittel (10), das auf einer der Sitzwanne (4) abgewandten Seite eine Sitzfläche (12) für einen Nutzer des Neigefahrzeugs bildet, und die mindestens ein elastisch verformbares Füllelement (14) aufweist, das im Spalt zwischen Fahrzeugkomponente (8) und Sitzwanne (4) angeordnet und den Spalt zumindest auf der Seite der Sitzfläche (12) in Gänze oder zumindest abschnittsweise verschließend festgelegt ist.

## Claims

1. Seat device (2) for a leaning vehicle, with at least one seat pan (4), which can be fixed or is fixed to a support structure (6) of the leaning vehicle spaced apart from a vehicle component (8), such as a tank, of the leaning vehicle by a gap without contact, with at least one cushion means (10) fixed in or on the seat pan (4), which forms on a side facing away from the seat pan (4) a seating surface (12) for a user of the leaning vehicle, with at least one elastically deformable filling element (14), which can be arranged or is arranged in the gap between vehicle component (8) and seat pan (4) and is fixed closing the gap at least on the side of the seating surface (12) entirely or at least in sections, and with at least one cover means (16), which overlaps the cushion means (10) at least in the region of the seating surface (12) with a seating surface section (18) of the cover means (16) entirely or at least in sections and which is fixed on an outer surface of the seat pan (4), which faces the vehicle component (8), with the seating surface section (18), wherein the cover means (16) is fixed on the side of the seat pan (4) facing away from the cushion means (10) at an upper end with a first fixing section (22) on the seat pan (4), wherein the filling element (14) abuts the first fixing section (22), **characterized in that** the first fixing section (22) comprises a folding region (24) deflecting the cover means (16), wherein the cover means (16) transitions in the folding region (24) from the seating surface section (18) into the filling element section (20).

2. Seat device (2) according to claim 1, **characterized in that** the filling element (14) is fixed releasably, in particular in a form-fitting and/or force-fitting manner, in particular, screwed or clipped, or non-releasably, in particular in a form-fitting, force-fitting and/or material-fitting manner, in particular adhesively bonded, injection-moulded, riveted or welded, on the seat pan (4).

3. Seat device (2) according to claim 1 or 2, **characterized in that** the cover means (16) overlaps the filling element (14) by a filling element section (20) of the cover means (16) entirely or at least in sections, in particular on the side facing away from the seat pan (4) and/or continuing the seating surface (12).

4. Seat device (2) according to one of the preceding claims, **characterized in that** the filling element (14) is fixed at least in regions indirectly or directly on the seat pan (4) and that the filling element section (20) of the cover means (16) is fixed on the side of the seat pan (4) facing away from the cushion means (10) at an end of the filling element (14) facing away from the upper end of the seat pan (4) with a second fixing section (26) on the seat pan (4), wherein the seat pan (4) and the cover means (16) surround the filling element (14) entirely.

5. Seat device (2) according to one of the preceding claims, **characterized in that** the cushion means (10) is fixed at the first fixing section (22) and/or at the second fixing section (26) releasably, in particular in a form-fitting and/or force-fitting manner, in particular, clamped, stapled, screwed or clipped, or non-releasably, in particular in a form-fitting, force-fitting and/or material-fitting manner, in particular adhesively bonded, injection-moulded, riveted or welded, on the seat pan (4).

6. Seat device (2) according to one of the preceding claims, **characterized in that** the filling element (14) comprises a plastic, in particular an elastomer, or a foam, in particular a foam lip, and/or that the cushion element (10) comprises a foam.

7. Leaning vehicle with at least one vehicle component (8), with at least one support structure (6) and with at least one seat device (2) according to one of claims 1 to 6, which has at least one seat pan (4), which is fixed on the support structure (6) spaced apart from the vehicle component (8) by a gap without contact, which has at least one cushion means (10) fixed in or on the seat pan (4), which forms on a side facing away from the seat pan (4) a seating surface (12) for a user of the leaning vehicle, and which has at least one elastically deformable filling element (14), which is arranged in the gap between vehicle component (8) and seat pan (4) and is fixed closing the gap at least on the side of the seating surface (12) entirely or at least in sections.

## Revendications

1. Dispositif de siège (2) pour un véhicule inclinable, comprenant au moins une cuvette de siège (4), qui peut être fixée ou est fixée à une structure porteuse (6) du véhicule inclinable espacée sans contact d'un composant de véhicule (8), tel qu'un réservoir, du véhicule inclinable par un intervalle, comprenant au moins un moyen de rembourrage (10) fixé dans ou sur la cuvette de siège (4), qui forme sur un côté opposé à la cuvette de siège (4) une surface d'assise (12) pour un utilisateur du véhicule inclinable, comprenant au moins un élément de remplissage (14) déformable élastiquement, qui peut être disposé ou est disposé dans l'intervalle entre le composant de véhicule (8) et la cuvette de siège (4) et est fixé en fermant l'intervalle au moins du côté de la surface d'assise (12) entièrement ou au moins par sections, et comprenant au moins un moyen de revêtement (16), qui recouvre le moyen de rembourrage (10) au moins dans la région de la surface d'assise (12) avec une section de surface d'assise (18) du moyen de revêtement (16) entièrement ou au moins par sections et qui est fixé sur une surface extérieure de la cuvette de siège (4), qui est orientée vers le composant de véhicule (8), avec la section de surface d'assise (18), le moyen de revêtement (16) étant fixé sur le côté de la cuvette de siège (4) opposé au moyen de rembourrage (10) à une extrémité supérieure avec une première section de fixation (22) sur la cuvette de siège (4), l'élément de remplissage (14) venant en appui contre la première section de fixation (22), **caractérisé en ce que** la première section de fixation (22) comprend une région de pliage (24) déviant le moyen de revêtement (16), le moyen de revêtement (16) passant dans la région de pliage (24) de la section de surface d'assise (18) à la section d'élément de remplissage (20).

2. Dispositif de siège (2) selon la revendication 1, **caractérisé en ce que** l'élément de remplissage (14) est fixé de manière détachable, en particulier par complémentarité de forme et/ou par adhérence, en particulier, vissé ou clipsé, ou de manière non détachable, en particulier par complémentarité de forme, par adhérence et/ou par liaison de matière, en particulier collé, surmoulé, riveté ou soudé, sur la cuvette de siège (4).

3. Dispositif de siège (2) selon la revendication 1 ou 2, **caractérisé en ce que** le moyen de revêtement (16) recouvre l'élément de remplissage (14) par une section d'élément de remplissage (20) du moyen de revêtement (16) entièrement ou au moins par sections, en particulier sur le côté opposé à la cuvette de siège (4) et/ou en prolongeant la surface d'assise (12).

4. Dispositif de siège (2) selon l'une des revendications précédentes, **caractérisé en ce que** l'élément de remplissage (14) est fixé au moins par régions indirectement ou directement sur la cuvette de siège (4) et **en ce que** la section d'élément de remplissage (20) du moyen de revêtement (16) est fixée sur le côté de la cuvette de siège (4) opposé au moyen de rembourrage (10) à une extrémité de l'élément de remplissage (14) opposée à l'extrémité supérieure de la cuvette de siège (4) avec une deuxième section de fixation (26) sur la cuvette de siège (4), la cuvette de siège (4) et le moyen de revêtement (16) entourant l'élément de remplissage (14) entièrement.

5. Dispositif de siège (2) selon l'une des revendications précédentes, **caractérisé en ce que** le moyen de rembourrage (10) est fixé à la première section de fixation (22) et/ou à la deuxième section de fixation (26) de manière détachable, en particulier par complémentarité de forme et/ou par adhérence, en particulier, agrafé, cloué, vissé ou clipsé, ou de manière non détachable, en particulier par complémentarité de forme, par adhérence et/ou par liaison de matière, en particulier collé, surmoulé, riveté ou soudé, sur la cuvette de siège (4).

6. Dispositif de siège (2) selon l'une des revendications précédentes, **caractérisé en ce que** l'élément de remplissage (14) comprend une matière plastique, en particulier un élastomère, ou une mousse, en particulier une lèvre en mousse, et/ou **en ce que** l'élément de rembourrage (10) comprend une mousse.

7. Véhicule inclinable comprenant au moins un composant de véhicule (8), comprenant au moins une structure porteuse (6) et comprenant au moins un dispositif de siège (2) selon l'une des revendications 1 à 6, qui présente au moins une cuvette de siège (4), qui est fixée à la structure porteuse (6) espacée sans contact du composant de véhicule (8) par un intervalle, qui présente au moins un moyen de rembourrage (10) fixé dans ou sur la cuvette de siège (4), qui forme sur un côté opposé à la cuvette de siège (4) une surface d'assise (12) pour un utilisateur du véhicule inclinable, et qui présente au moins un élément de remplissage (14) déformable élastiquement, qui est disposé dans l'intervalle entre le composant de véhicule (8) et la cuvette de siège (4) et est fixé en fermant l'intervalle au moins du côté de la surface d'assise (12) entièrement ou au moins par sections.
